# DEMANDE DE BREVET EUROPEEN

(11) **EP 2 047 970 A2**
(43) Date de publication de la demande: **15.04.2009**
(21) Numéro de dépôt: 08166237.1
(22) Date de dépôt: 09.10.2008
(51) Int. Cl.: B29C 65/16, B29K 71/00, B29K 79/00, B29K 81/00

(54) **Procédé de soudage de deux éléments en matériau polymère opaques et résistants à haute température**

(30) Priorité: 10.10.2007 FR 0758190
(71) Demandeur: ALSTOM Transport SA, 92300 Levallois-Perret (FR)
(72) Inventeur: Habas, Jean-Pierre, 64110 Saint Faust (FR); Ricbourg, Maxime, 64000 Pau (FR); Madre Sediles, Maria, 50018 Zaragoza (ES); Sotelo Mieg, Andrès, 50018 Zaragoza (ES); Pignolet, Pascal, 64420 Nousty (FR)
(74) Mandataire: Blot, Philippe Robert Emile

(57) **Abrégé**

Ce procédé comprend les étapes suivantes :
- préparer un élément inférieur (2) en matériau polymère opaque et résistant à haute température auquel est ajouté une poudre de carbone de sorte que l'élément inférieur (2) est apte à absorber un rayonnement laser (1),
- préparer un élément supérieur (4) en matériau polymère résistant à haute température,
- souder au laser les éléments inférieur (2) et supérieur (4) au moyen d'un rayonnement laser (1) traversant l'élément supérieur (4) et réalisant le soudage à l'interface entre l'élément supérieur (4) et l'élément inférieur (2).

L'élément supérieur (4) est rendu, au cours de sa préparation, opaque au rayonnement visible et transparent au rayonnement laser par ajout d'un pigment au matériau polymère, ledit pigment, de nature minérale ou organique, ne modifiant pas les propriétés du matériau polymère, étant transparent au rayonnement laser et résistant à haute température.

## Description

La présente invention concerne un procédé de soudage de deux éléments en matériau polymère opaques et résistants à haute température, du type comprenant les étapes suivantes :
- préparer un élément inférieur en matériau polymère résistant à haute température et auquel est ajouté une poudre de carbone de sorte que l'élément inférieur soit opaque au rayonnement lumineux visible et soit apte à absorber un rayonnement laser,
- préparer un élément supérieur en matériau polymère résistant à haute température,
- souder au laser les éléments inférieur et supérieur au moyen d'un rayonnement laser traversant l'élément supérieur et réalisant le soudage à l'interface entre l'élément supérieur et l'élément inférieur.

L'invention concerne également un assemblage d'éléments en matériau thermoplastique résistant à hautes températures et un dispositif d'encapsulement, ou boîtier, d'un convertisseur de puissance comprenant un tel assemblage.

Dans les convertisseurs de puissance connus, les dispositifs d'encapsulement ou encore le boîtier des convertisseurs comprennent un assemblage d'une pluralité d'éléments en matériau polymère, assemblés les uns aux autres au moyen d'un matériau formant un joint adhésif et étanche, tel que du silicone. Ces éléments sont par exemple assemblés de sorte à former des capots protecteurs incluant dans leur épaisseur des conduits de refroidissement du convertisseur d'énergie. Ce dernier peut en effet monter à des températures sensiblement supérieures à 250°C mais n'accepte aucune dérive thermique. A ce titre, les conduits sont traversés par un fluide caloporteur ou liquide de refroidissement tel qu'un mélange d'eau et de glycol.

Cependant, le joint adhésif n'est pas satisfaisant pour assurer sur le long terme une étanchéité totale entre les éléments du boîtier, du fait de ses propriétés physiques et chimiques. Il se produit alors des fuites du liquide de refroidissement ce qui peut entraîner des problèmes de court-circuit du convertisseur de puissance.

Pour pallier cet inconvénient, une solution idéale serait de souder les éléments en matériau polymère les uns aux autres. Ainsi, les zones d'assemblage entre les éléments seraient parfaitement étanches du fait de la soudure qui crée une continuité de matériau dans la zone d'assemblage et donc un joint en matériau polymère présentant les mêmes propriétés physiques et chimiques que les éléments assemblés.

Cependant, la soudure au laser de deux éléments en matériau polymère opaques et résistant à haute température pose problème, car il faut s'assurer que le rayonnement laser traverse un des éléments et provoque la soudure à l'interface entre les deux éléments, sans modifier les propriétés électriques, mécaniques et chimiques des matériaux polymères.

Le document WO-2006/08 56 43 décrit un procédé de soudage de deux éléments en matériau polymère dont l'un est rendu opaque au rayonnement visible et au rayonnement laser et l'autre est rendu opaque au rayonnement visible et transparent au rayonnement laser par ajout d'un colorant du type anthraquinone. Un tel colorant permet de souder des polymères techniques qui présentent un point de ramollissement et une température de mise en oeuvre inférieure à la température de dégradation du colorant qui survient dès 250°C. Un tel procédé de soudage ne permet pas de souder des polymères dont la température de mise en oeuvre est très élevée notamment au-delà de 300°C.

L'un des objectifs de l'invention est de pallier ce problème en proposant un procédé de soudage de deux éléments opaques dans lequel la soudure est bien réalisée à l'interface entre les deux éléments et où les propriétés des matériaux des éléments ne sont pas modifiées.

A cet effet, l'invention concerne un procédé du type précité, dans lequel l'élément supérieur est rendu, au cours de sa préparation, opaque au rayonnement visible et transparent au rayonnement laser par ajout d'un pigment au matériau polymère, ledit pigment, de nature minérale ou organique, ne modifiant pas les propriétés du matériau polymère, étant transparent au rayonnement laser et résistant à haute température.

Selon d'autres caractéristiques du procédé :
- l'élément supérieur et l'élément inférieur sont pressés l'un contre l'autre lors du soudage au laser ;
- les matériaux polymères des éléments inférieur et supérieur et le pigment ajouté à l'élément supérieur sont résistants à des températures d'au moins 250 °C ;
- les matériaux polymères des éléments inférieur et supérieur appartiennent à la famille :
   - des polyétherimide,
   - des thermoplastiques à rotule sulfone tels que le polysulfone, le polyéthersulfone et autres dérivés,
   - des polyétheréthercétone,
   - du poly(sulfure de phénylène),
   - du polycarbonate,
   - des formulations obtenues par mélange ou co-réaction des composés susmentionnés,
- le pigment est un oxyde de cobalt et d'aluminium (Al₂O₃, CoO) ou l'oxyde de cobalt seul (CoO) ou le phosphate de cobalt (Co₃(PO₄)₂) ou le violet de manganèse ; et
- une source laser est déplacée au-dessus d'une zone d'assemblage des deux éléments de sorte que le rayonnement laser, émis par la source laser, balaye ladite zone d'assemblage,
- la poudre de carbone mélangée au polymère de l'élément inférieur est une poudre de carbone micrométrique.

L'invention concerne également un assemblage d'éléments en matériau thermoplastique résistant à hautes températures, comprenant une pluralité d'éléments en matériau polymère opaques au rayonnement lumineux visible et résistants à haute température, dans lequel au moins un des éléments comprend un pigment ajouté au matériau polymère, ledit pigment, de nature minérale ou organique, ne modifiant pas les propriétés du matériau polymère, étant transparent au rayonnement laser et résistant à haute température.

Selon d'autres caractéristiques de l'assemblage :
- les zones d'assemblage entre les éléments sont étanches ;
- l'assemblage est électriquement isolant ; et
- les éléments sont assemblés entre eux par un procédé de soudage tel que défini ci-dessus.

L'invention concerne également un boîtier d'un convertisseur de puissance comprenant au moins un assemblage tel que décrit ci-dessus.

L'invention concerne également un matériau polymère opaque au rayonnement lumineux visible et résistant à haute température, comprenant un pigment ajouté au matériau polymère, ledit pigment, de nature minérale ou organique, ne modifiant pas les propriétés du matériau polymère, étant transparent au rayonnement laser et résistant à haute température, de sorte que matériau polymère est transparent au rayonnement laser.

L'invention concerne également l'utilisation d'un matériau polymère tel que décrit ci-dessus dans un procédé de soudage tel que décrit précédemment.

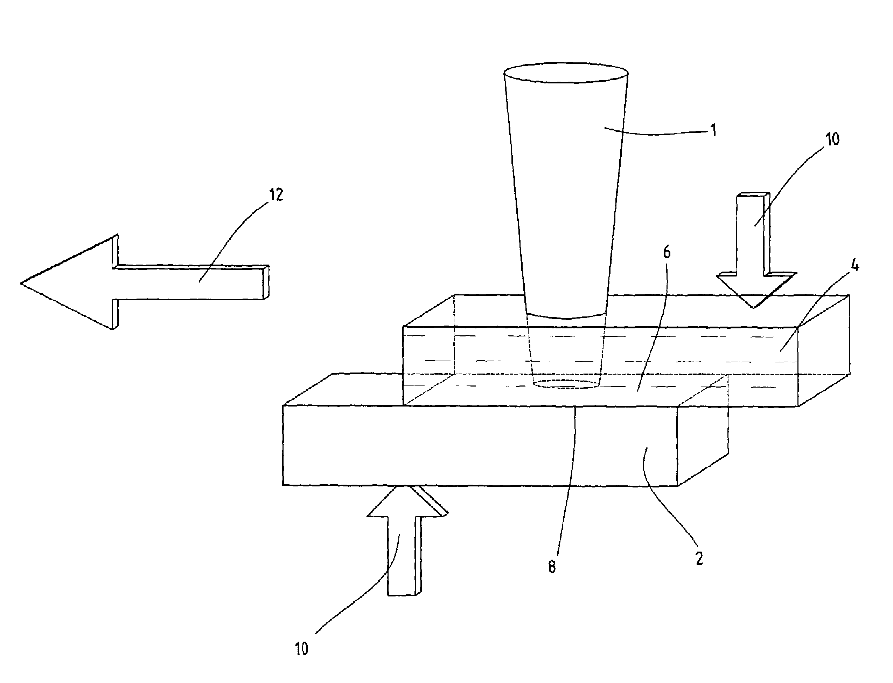

D'autres aspects et avantages de l'invention apparaîtront à la lecture de la description qui suit, donnée à titre d'exemple et faite en référence à la figure annexée qui est une représentation schématique d'une étape de soudure au laser de deux éléments.

En référence à la figure unique, on décrit le soudage au laser, au moyen d'un rayonnement laser 1 issue d'une source laser (non représentée), d'un élément inférieur 2 à un élément supérieur 4.

L'élément inférieur 2 et l'élément supérieur 4 sont réalisés à partir d'un même matériau polymère thermoplastique résistant à haute température. Ce matériau appartient par exemple au groupe des polyétherimide, les thermoplastiques à rotule sulfone tels que le polysulfone ou le polyéthersulfone et leurs dérivés, polyétheréthercétone (PEEK) ou poly(sulfure de phénylène) (PPS) ou tout autres thermoplastiques à hautes performances, notamment amorphe.

L'élément inférieur 2 est rendu opaque au rayonnement laser et au rayonnement visible au moyen d'une poudre de carbone micrométrique mélangée au matériau polymère. Par opaque au rayonnement laser et au rayonnement visible, on entend qu'un rayonnement lumineux visible ou un rayonnement laser ne traversent pas l'élément inférieur 2. L'élément inférieur 2 comprend par exemple 0,6% en volume de poudre de carbone micrométrique (grains de diamètre compris entre 2 et 15 µm) mélangé à un polymère. La poudre de carbone absorbe le rayonnement laser 1, ce qui a pour effet de faire chauffer et fondre la surface 6 de l'élément inférieur 2 lorsqu'elle est touchée par le rayonnement laser 1.

L'élément supérieur 4 est rendu opaque au rayonnement visible au moyen d'un pigment minéral. Ce pigment a pour caractéristiques d'être quasi-transparent au rayonnement laser 1, c'est-à-dire qu'il n'absorbe que très peu le rayonnement laser, et d'être opaque à la lumière visible. En outre, cet additif ne modifie pas les propriétés du matériau polymère de l'élément supérieur 4, notamment ses propriétés mécaniques, électriques et chimiques. Une des propriétés mécaniques non modifiées par l'additif est par exemple le module d'Young du matériau polymère. Des propriétés électriques non modifiées par l'additif sont par exemple la tension de claquage et le champ de rupture du matériau polymère. Une des propriétés chimiques non modifiées par l'additif est par exemple l'inertie chimique du matériau polymère, c'est-à-dire sa compatibilité avec d'autres matériaux. Les propriétés mentionnées ci-dessus ne sont données qu'à titre d'exemple non limitatif.

Le pigment est résistant aux très hautes températures, par exemple supérieures à 800°C et notamment supérieures à 1000°C, et peut donc être utilisé avec les polymères dont la température de mise en oeuvre est très élevée à l'image du PEEK.. Le pigment minéral est par exemple une spinelle d'oxyde de cobalt et d'aluminium (Al₂O₃, CoO) ou l'oxyde de cobalt seul (CoO) ou le phosphate de cobalt (Co₃(PO₄)₂) ou le violet de manganèse. L'élément supérieur 4 comprend par exemple 0,14% en volume de pigment de type oxyde de cobalt et d'aluminium (Al₂O₃, CoO)

Le matériau polymère des éléments inférieur 2 et supérieur 4, ainsi que le pigment de l'élément supérieur 4 sont résistants à des températures d'au moins 250°C.

Pour réaliser le soudage, l'élément supérieur 4 est disposé sur la surface 6 de l'élément inférieur 2 sur une zone d'assemblage 8.

Le rayonnement laser 1 est émis depuis la source laser au-dessus de l'élément supérieur 4. Du fait de la transparence du pigment au rayonnement laser 1, le rayonnement laser traverse l'élément supérieur 4 et atteint la surface 6 de l'élément inférieur 2 dans la zone d'assemblage 8. Du fait de la présence de la poudre de carbone dans l'élément inférieur 2, le rayonnement laser 1 est absorbé au niveau de la surface 6 et provoque la fusion du matériau de l'élément inférieur 2, ce qui crée la soudure à l'interface entre l'élément supérieur 4 et l'élément inférieur 2.

Les éléments inférieur 2 et supérieur 4 sont pressés l'un contre l'autre lors du soudage, comme représenté par les flèches 10 de la figure.

De plus, la source laser est mobile de sorte que le rayonnement laser 1 balaye la zone d'assemblage 8 et réalise la soudure sur toute cette zone, comme représenté par la flèche 12 de la figure.

Les éléments 2 et 4 peuvent être de forme quelconque. Le placement des éléments l'un par rapport à l'autre est réalisé au moyen d'une table 3 axes pour une géométrie simple, par exemple pour des éléments sensiblement plans. Pour une géométrie complexe, le rayonnement laser est amené au moyen de fibres optiques qui permettent un positionnement précis du rayonnement laser 1 sur la zone d'assemblage 8.

La source laser est par exemple une diode à émission continue, émettant dans le visible ou dans le proche infrarouge, de préférence de longueur d'onde sensiblement égale à 808 nm. Un seul passage de rayonnement laser suffit à réaliser la soudure à une vitesse de balayage sensiblement comprise entre 0,1 mm.s⁻¹ et 1 mm.s⁻¹, de préférence sensiblement égale à 0,5 mm.s⁻¹. Le faisceau laser est homogène et de forme sensiblement rectangulaire, le rectangle présentant une largeur sensiblement comprise entre 4 et 5 cm et une longueur sensiblement comprise entre 0,5 mm et 5 mm. La puissance du laser est sensiblement comprise entre 100 W et 500 W, de préférence sensiblement égale à 350 W. La diode laser peut être alimentée par un courant sensiblement compris entre 10 A et 50 A, de préférence entre 20 A et 30 A, ce qui lui confère une densité de puissance sensiblement comprise entre de 0,8 W.mm⁻¹ et 1,6 W.mm⁻¹.

Le procédé décrit ci-dessus permet donc de réaliser le soudage de deux éléments opaques à la lumière visible sans modifier les caractéristiques électriques, mécaniques et chimiques des matériaux polymères des éléments. Notamment, on peut réaliser le soudage de deux éléments résistants aux très hautes températures. Cependant, le procédé peut être utilisé avec tout type de matériaux polymères, et notamment des polymères techniques de plus basse température de ramollissement. L'ajout d'un pigment représente donc une solution plus « universelle » que l'utilisation d'un colorant pour la soudure de tout type de matériaux polymères. En effet, l'utilisation d'un colorant limite le type de matériaux polymères pouvant être soudés du fait de la stabilité thermique limitée du colorant. Avec un colorant, seuls des polymères techniques de plus basse température de ramollissement peuvent être soudés entre eux, tandis que l'utilisation d'un pigment permet de souder en plus des polymères dont la température de mise en oeuvre est très élevée.

De plus, le cordon de soudure réalisé est parfaitement étanche étant donné que les éléments sont liés l'un à l'autre par une continuité d'un même matériau et que ce cordon présente les mêmes caractéristiques que les élément inférieur 2 et supérieur 4. La qualité globale du joint de soudure peut être grandement améliorée grâce à l'utilisation d'une bordure latérale en PTFE (non représentée) qui épouse la forme périphérique des éléments à souder. Ce gabarit extérieur interdit tout débordement de matière plastique. Il prévient également la formation de bulles au sein du cordon de soudure qui pourraient être néfastes au fonctionnement électrique (décharges partielles)

Le procédé décrit ci-dessus trouve notamment des applications pour réaliser des assemblages d'éléments en matériau polymère résistants à hautes températures, notamment des boîtiers de convertisseur de puissance. Un tel boîtier comprend au moins un assemblage d'une pluralité d'éléments qui sont assemblés les uns aux autres selon le procédé décrit ci-dessus.

Ces convertisseurs dégagent une chaleur importante et le procédé permet de réaliser un boîtier, résistant à de telles températures pouvant monter jusqu'à au moins 250°C.

Les éléments assemblés permettent de réaliser des canaux de refroidissement dans lesquels circule un liquide de refroidissement par exemple formé d'eau et de glycol. L'étanchéité de la soudure permet d'obtenir des canaux sans risque de fuites et donc de courts-circuits.

De plus, du fait des propriétés électriques des éléments assemblés et du cordon de soudure, le boîtier est un isolant électrique.

L'assemblage d'éléments en matériau polymère résistant à hautes températures trouve également des applications dans d'autres domaines, tels que l'industrie automobile, l'aéronautique, la microélectronique etc.

## Revendications

1. Procédé de soudage de deux éléments (2, 4) en matériau polymère opaques au rayonnement lumineux visible et résistants à haute température, comprenant les étapes suivantes :
- préparer un élément inférieur (2) en matériau polymère résistant à haute température et auquel est ajouté une poudre de carbone de sorte que l'élément inférieur (2) soit opaque au rayonnement lumineux visible et soit apte à absorber un rayonnement laser (1),
- préparer un élément supérieur (4) en matériau polymère résistant à haute température,
- souder au laser les éléments inférieur (2) et supérieur (4) au moyen d'un rayonnement laser (1) traversant l'élément supérieur (4) et réalisant le soudage à l'interface entre l'élément supérieur (4) et l'élément inférieur (2),
**caractérisé en ce que** l'élément supérieur (4) est rendu, au cours de sa préparation, opaque au rayonnement visible et transparent au rayonnement laser par ajout d'un pigment au matériau polymère, ledit pigment, de nature minérale ou organique, ne modifiant pas les propriétés du matériau polymère, étant transparent au rayonnement laser et résistant à haute température.

2. Procédé de soudage selon la revendication 1, **caractérisé en ce que** l'élément supérieur (4) et l'élément inférieur (2) sont pressés l'un contre l'autre lors du soudage au laser.

3. Procédé de soudage selon la revendication 1 ou 2, **caractérisé en ce que** les matériaux polymères des éléments inférieur (2) et supérieur (4) et le pigment ajouté à l'élément supérieur (4) sont résistants à des températures d'au moins 250 °C.

4. Procédé de soudage selon l'une quelconque des revendications 1 à 3, **caractérisé en ce que** les matériaux polymères des élément inférieur (2) et supérieur (4) appartiennent à la famille :
- des polyétherimide,
- des thermoplastiques à rotule sulfone tels que le polysulfone, le polyéthersulfone et autres dérivés,
- des polyétheréthercétone,
- du poly(sulfure de phénylène),
- du polycarbonate,
- des formulations obtenues par mélange ou co-réaction des composés susmentionnés.

5. Procédé de soudage selon l'une quelconque des revendications 1 à 4, **caractérisé en ce que** le pigment est un oxyde de cobalt et d'aluminium (Al₂O₃, CoO) ou l'oxyde de cobalt seul (CoO) ou le phosphate de cobalt (Co₃(PO₄)₂) ou le violet de manganèse.

6. Procédé de soudage selon l'une quelconque des revendications 1 à 5, **caractérisé en ce qu'**une source laser est déplacée au-dessus d'une zone d'assemblage (8) des deux éléments (2, 4) de sorte que le rayonnement laser (1), émis par la source laser, balaye ladite zone d'assemblage (8).

7. Procédé de soudage selon l'une quelconque des revendications 1 à 6, **caractérisé en ce que** la poudre de carbone mélangée au polymère de l'élément inférieur (2) est une poudre de carbone micrométrique.

8. Assemblage d'éléments en matériau thermoplastique résistant à hautes températures, comprenant une pluralité d'éléments (2, 4) en matériau polymère opaques au rayonnement lumineux visible et résistants à haute température, **caractérisé en ce qu'**au moins un des éléments (4) comprend un pigment ajouté au matériau polymère, ledit pigment, de nature minérale ou organique, ne modifiant pas les propriétés du matériau polymère, étant transparent au rayonnement laser et résistant à haute température.

9. Assemblage selon la revendication 8, **caractérisé en ce que** les zones d'assemblage (8) entre les éléments (2, 4) sont étanches.

10. Assemblage selon la revendication 8 ou 9, **caractérisé en ce qu'**il est électriquement isolant.

11. Assemblage selon l'une quelconque des revendications 8 à 10, **caractérisé en ce que** les éléments (2, 4) sont assemblés entre eux par un procédé de soudage selon l'une quelconque des revendications 1 à 6.

12. Boîtier d'un convertisseur de puissance, **caractérisé en ce qu'**il comprend au moins un assemblage selon l'une quelconque des revendications 8 à 11.

13. Matériau polymère opaque au rayonnement lumineux visible et résistant à haute température, **caractérisé en ce qu'**il comprend un pigment ajouté au matériau polymère, ledit pigment, de nature minérale ou organique, ne modifiant pas les propriétés du matériau polymère, étant transparent au rayonnement laser et résistant à haute température, de sorte que matériau polymère est transparent au rayonnement laser.

14. Utilisation d'un matériau polymère selon la revendication 13 dans un procédé de soudage selon l'une quelconque des revendications 1 à 7.
